# EUROPÄISCHE PATENTSCHRIFT

(11) **EP 1 244 897 B1**
(45) Veröffentlichungstag und Bekanntmachung des Hinweises auf die Patenterteilung: **04.06.2003**
(21) Anmeldenummer: 00991228.8
(22) Anmeldetag: 20.12.2000
(51) Int. Cl.: G01L 3/10, G01D 5/12

(54) **ANORDNUNG ZUR KONTAKTLOSEN ERFASSUNG ROTATORISCHER GRÖSSEN ZWISCHEN ROTIERENDEN TEILEN**
ARRANGEMENT FOR DETECTING ROTATIONAL VARIABLES BETWEEN ROTATING COMPONENTS IN A CONTACTLESS MANNER
DISPOSITIF DE DETECTION SANS CONTACT DE GRANDEURS DE ROTATION ENTRE DES PIECES ROTATIVES

(30) Priorität: 20.12.1999 DE 19961884
(43) Veröffentlichungstag der Anmeldung: 02.10.2002
(73) Patentinhaber: Strothmann, Thomas, Dipl.-Ing., 49134 Wallenhorst (DE)
(72) Erfinder: Strothmann, Thomas, Dipl.-Ing., 49134 Wallenhorst (DE)
(74) Vertreter: Patentanwälte Rehberg + Hüppe
(86) Internationale Anmeldenummer: EP0013000
(87) Internationale Veröffentlichungsnummer: WO01046662

(56) Entgegenhaltungen:
- EP-A- 0 366 217
- DE-A- 2 942 873
- DE-A- 19 816 568
- US-A- 4 724 710
- US-A- 4 784 002
- US-A- 4 984 474

## Beschreibung

Die Erfindung bezieht sich auf eine Anordnung zur kontaktlosen Erfassung von rotatorischen Größen zwischen rotierenden Teilen gemäß dem Oberbegriff des Anspruchs 1..

Es ist zur kontaktlosen Erfassung von rotatorischen Größen zwischen rotierenden Teilen, wie z.B. Drehmomenten, Drehwinkeln, Drehgeschwindigkeiten oder Drehbeschleunigungen, üblich, das Problem auf eine Messung des Drehwinkels zwischen An- und Abtrieb zurückzuführen. Hierbei ist das Vorhandensein einer auf Torsion beanspruchten Antriebswelle meist unvermeidlich, jedoch in der Regel auch nicht störend, da die am häufigsten zu ermittelnde Größe ohnehin das Drehmoment ist. Verfahren, die Drehbewegungen torsionsfrei messen, werden daher häufig nachträglich mit Federanordnungen oder Torsionselementen versehen, um eine Umsetzung von Drehmomenten in Drehwinkel zu erreichen.

Zur Erfassung von Drehmomenten werden verbreitet indirekte Methoden verwendet. Das Drehmoment an einer Welle ruft ein Gegenmoment z.B. an einem stillstehenden Antriebselement hervor. Verbreitete Praxis ist hier, dieses Gegenmoment durch eine stationäre Kraftmessung zu ermitteln, wie es z.B. exemplarisch in der US 5,895,867 beschrieben ist. Allerdings sind diese Meßverfahren nur für einfachste Zwecke ausreichend.

Weiterhin ist es bekannt, zur direkten Drehmomentmessung sowie zur Messung weiterer rotatorischer Größen einen Meßaufnehmer mitsamt einer geeigneten Auswerteelektronik an den rotierenden Teilen anzubringen. Diese Elektronik ist über eine meist aufwendige Energie- und/oder eine elektrische Informationsübertragung mit dem stationären Meßdatenempfänger verbunden, da keine direkte elektrische Verbindung zwischen den rotierenden Meßkomponenten und dem stationären Auswertegerät hergestellt werden kann. Gegenüber kontaktgebundenen Systemen (wie z.B. aus der US 4,890,501 bekannt) werden kontaktlose Systeme grundsätzlich bevorzugt. Die US 5,705,757 zeigt stellvertretend für viele Lösungen gleicher Art eine Dehnungsmeßstreifen-Meßelektronik mit Sender und Empfänger. Andere Dokumente, wie die US 4,186,596, beschränken sich auf die Beschreibung der Art der Meßwerterfassung, lassen die Frage der Meßwertübertragung auf das stationäre System jedoch offen.

Als Variante der Informationsübertragung sind rotationssymmetrische Transformatoren bekannt.

Bessere Methoden verzichten gleich auf aktive Teile an den rotierenden Teilen, und ermitteln das gewünschte Signal stationär. Verwendet werden z.B. Torsionsfedern mit zwei stationär angebrachten optischen Encodern, die bei Drehmomentbeanspruchung einen meßbaren Phasenversatz zwischen den Encodern liefern. Hier sind Probleme aufgrund der optischen Wegstrecken zu erwarten, die verschmutzen können oder aufgrund der Umgebungsbedingungen überhaupt nicht verwendet werden können. Als Variante des gleichen Prinzips wird in diesen Fällen meist eine magnetische Abtastung statt der optischen verwendet. Stellvertretend für eine große Anzahl von Lösungen nach diesem Prinzip sei die US 4,150,566 angeführt.

Eine komplexere Variante ist in der US 5,490,431 erwähnt, wobei eine aufwendige Auswertung zweier magnetischer Pfade notwendig ist, und darüberhinaus die Beeinflussung dieser magnetischen Pfade über eine Vielzahl spezieller ferromagnetischer Stifte erfolgt.
Im Stillstand steht bei diesen Methoden, die auf sich mitdrehende aktive Komponenten verzichten, in der Regel kein Meßsignal zur Verfügung.

Es werden daher auch Systeme mit Spulen angewandt, deren Induktivität, oder bei Mehrspulensystemen deren Kopplungsgrad, in Abhängigkeit von einer häufig axialen Verschiebung eines ferromagnetischen Bauteils verändert wird, sodaß die Drehzahl bei der Auswertung keine Rolle spielt (vergleiche z.B.: US 4,907,460 oder US 4,448,275 ). Größerer Aufwand entfällt hier jedoch auf die Umsetzung des Drehwinkels in eine axiale Bewegung (vergleiche z.B.: US 5,353,648 oder US 4,809,557).

Daneben existieren eine Reihe noch komplizierterer Methoden der Auswertung (vergleiche z.B.: US 4,680.976 oder US 5,754,295).

Viele Anordnungen bei denen das Drehmoment direkt an der Welle kontaktlos gemessen wird, gehen auf den magnetostriktiven Effekt zurück, wie z.B. beschrieben in ASEA Journal 1960, Vol. 33.3, pp 23-32, und beschäftigen sich im eigentlichen mit der Beseitigung typischer Unzulänglichkeiten dieser Technologie.

Verbesserte Lösungen versuchen, einen durch Verdrehen beeinflußbaren, magnetischen Kreis aufzubauen, dessen Bestandteil ein stationärer, magnetisch empfindlicher Sensor ist, und der ansonsten ohne elektrische Bauteile auskommt. In der US 4,984,474 ist eine Drehwinkelerfassung auf der Basis von Magneten beschrieben, jedoch ist der magnetische Kreis sehr aufwendig.

Die US 4,784,002 schlägt eine besondere, allerdings auch nicht unkomplizierte Formgebung des magnetischen Pfades vor. Infolgedessen muß mit einer großen Anzahl von Magneten gearbeitet werden, um eine zumindest ausreichende Signalamplitude zu erhalten.

Gemäß der DE 19816568A1 wird ein Fluß in Flußleitstücken permanent durch mindestens einen Magneten aufrechterhalten. Eine drehwinkelabhängige Variation des Flusses wird bei dieser Lösung allein über eine Variation des Luftspalts erzielt. Diese Variation kann folglich nicht bipolar sein, und ist von geringer Amplitude. Die Drehwinkelabhängigkeit ist dadurch sehr unzureichend.

Die Probleme an diesen Verfahren sind mangelnde Zuverlässigkeit, mangelnde Drehzahlfestigkeit, fehlende Erfassung im Stillstand, mangelnde Sicherheit, aufwendige Signalaufbereitung, mangelnder Temperaturgang, Offsetfehler, langsame Erfassungsgeschwindigkeit, schlechte Einsetzbarkeit in aggressiver Umgebung, aufwendige Konstruktion und hohe Kosten, sodaß ein Einsatz nur in speziellen Fällen in Betracht kommt.

Der Erfindung lag die Aufgabe zugrunde, eine schnelle und präzise Erfassung rotatorischer Meßgrößen auf einfachste Weise zu ermöglichen, die den Gesichtspunkten Kosteneffizienz, Robustheit, Sicherheit, Konstruktionsspielraum, Toleranzunempfindlichkeit und Verschleißfreiheit vom Stillstand bis hin zu hohen Drehzahlen Rechnung trägt.

Diese Probleme werden durch die im Patentanspruch 1. beschriebene Anordnung gelöst. Vorteilhafte Ausführungsformen finden sich in den Unteransprüchen.

Die erfindungsgemäße Anordnung besteht im Kern aus einem Stator mit permanenter, radialer oder axialer Magnetisierung, wie z.B. einem magnetisierten Ferritring oder einem Metallring mit aufgebrachten Permanentmagneten, und aus einem ferromagnetischen (z.B. Eisen) Rotor mit Polköpfen in radialer bzw. axialer Orientierung zur magnetischen Abtastung des Stators. Zwischen dem Stator und dem Rotor ist axial oder radial zugänglich ein rotationssymmetrischer Luftspalt belassen, in dem sich der magnetische Fluss abhängig vom Differenzwinkel zwischen dem Rotor und dem Stator ändert und in dem diese Änderung erfaβt wird. An dem Stator sind Polpaare mit in Richtung des Differenzwinkels zwischen dem Rotor und dem Stator aufeinanderfolgenden Polen ausgebildet. Jeder Polkopf des Rotors liegt dabei in gleichen Verhältnissen unterhalb einem der magnetischen Polpaare des Stators. Vorzugsweise liegt jeder Polkopf in der Neutralposition mittig unterhalb der Stoßkante der beiden magnetischen Pole des Polpaars. Eine Drehung des Rotors relativ zum Stator hat an allen Polköpfen die gleiche Veränderung im magnetischen Fluß zur Folge. Diese Veränderung beeinflußt auch den Fluß an jeder Stelle im restlichen magnetischen Kreis. Der Rotor und der Stator weisen einen zusätzlichen, rotationssymmetrischen Luftspalt auf, durch den dieser Fluß geleitet wird. Auf diese Weise findet eine Veränderung des magnetischen Flusses abhängig vom Differenzwinkel zwischen Rotor und Stator statt, bedingt durch die Rotationssymmetrie des Spalts ist der Fluß dagegen unabhängig von der Drehbewegung der Anordnung insgesamt. Im Gegensatz zu einer elektrischen Maschine, in der die Summe der Polflüsse sich in einem Joch und einem Rückschlußring möglichst ausmitteln sollen, wird hier ein vom Drehwinkel zwischen Stator und Rotor abhängiger Summenfluß durch Joch, Rückschlußring und einen speziellen, zusätzlichen Luftspalt betont und nutzbringend verwertet.

Hauptsächlich durch Variieren der Polzahlen kann das gewünschte Ausgangssignal in Abhängigkeit vom Drehwinkel in weiten Grenzen festgelegt werden, durch Formveränderung der Polköpfe kann prinzipiell auch der Verlauf des Ausgangssignals im Verhältnis zum Drehwinkel bestimmt werden. Bedingt durch den kompakten und effizienten magnetischen Kreis ist darüberhinaus nur eine geringe Anzahl von Polen bzw. Magneten nötig, um eine hohe Empfindlichkeit der Anordnung zu erzielen. Da sowohl Rotor als auch Stator frei drehbar gestaltet werden können, besteht großer Spielraum bei der Ermittlung rotatorischer Größen. Aufgrund dieser Wahlfreiheit sind die Bezeichnungen Rotor und Stator allein aus Gründen der Definition gewählt; auch die genaue Ausführung des Rotors und des Stators, z.B. mit axialen oder radialen Luftspalten, kann ähnlich frei wie bei elektrischen Maschinen gestaltet werden.

Über eine zumeist ohnehin vorhandene Umsetzung translatorischer Größen in rotatorische können auch translatorische Größen gemessen werden. Bei großen Drehzahldifferenzen zwischen dem Rotor und dem Stator muß lediglich auf Wirbelstromverluste geachtet werden, gegebenenfalls muß der Rotor geblecht ausgeführt werden. Für sehr spezielle Anwendungen kann bei ausreichender Differenzdrehzahl eine auf den Rotorpolen befindliche Wicklung im geringem Umfang auch eine Versorgung rotierender Bauteile übernehmen, oder umgekehrt den magnetischen Fluß rückwirkend durch Änderung einer an der Wicklung angeschlossenen elektrischen Last beeinflussen.

Ein in dem Luftspalt angebrachtes magnetisch empfindliches Bauteil ermöglicht die Umsetzung des veränderlichen magnetischen Flusses in ein häufig notwendiges elektrisches Signal. Als magnetisch empfindliches Bauelement wird z.B. ein Hallsensor oder eine Feldplatte so stationär angebracht, daß die aktive Fläche dieses Bauteils in dem Luftspalt liegt. Bei ausreichender Größe des Luftspalts ist auch eine weitestgehende Unabhängigkeit des Meßsignals von kleinen axialen und radialen Toleranzen und Schwingungen gegeben. Aufgrund der hohen Empfindlichkeit der Anordnung sind schon bei kleinen Auslenkungen große Signalamplituden möglich, in vielen Fällen kann daher auf stabilisierende Maßnahmen, Offsetkorrekturen, Kompensationen oder dergleichen völlig verzichtet werden.

Wenn eine mechanische oder auch magnetische Feder zwischen dem Stator und dem Rotor Drehmomente in Drehwinkel übersetzt, sind neben Drehwinkeldifferenzen auch Drehmomente mit der neuen Anordnung erfaßbar. Das magnetische Haltemoment (Rastmoment) der Stator/Rotorpolanordnung selbst, oder, bei größeren Kräften, eine zusätzliche mechanische Feder zwischen Stator und Rotor, bestimmen dabei das Verhältnis des Drehwinkels zu dem Drehmoment. Eine Überlastung der Feder kann in Form zu großer Amplituden des magnetischen Flusses im Luftspalt erkannt werden, eine Zerstörung durch Überdrehen unter anderem durch Entstehen eines Wechselflusses. In der Ausführung ohne Feder sind die Funktionen reversible Überlastsicherung und Drehmomenterfassung darüberhinaus optimal kombiniert. In weiterer vorteilhafter Ausgestaltung wird der Zwischenraum zwischen Rotor und Stator mit Ausnahme des Luftspalts mit einem Elastomer gefüllt, sodaß ein geschlossenes, äußerst kompaktes, schwingungsdämpfendes Bauteil entsteht, welches zur direkten Drehmomentmessung geeignet ist.

Mit Hilfe einer para- oder diamagnetischen Kapselung ist ein Einsatz der Anordnung auch unter widrigen Bedingungen möglich. Eine Kapselung ist z.B. in Form eines Getriebegehäuses vorstellbar, in dem sich Schmierstoffe befinden. Das Gehäuse kann so gestaltet werden, daß der Luftspalt durch die Wandung hindurch für Sensoren zugänglich ist, vorzugsweise können auch geeignete Befestigungen für Sensoren im Gehäuse vorgesehen werden. Da letzteres zumeist aus Aluminium oder Kunststoff besteht, ist für die Funktion der Anordnung nicht unbedingt eine Öffnung erforderlich. Unter bestimmten Voraussetzungen ist auch die Kapselung nur des Rotors oder des Stators möglich. Dies ermöglicht eine meß- und kontrollierbare Kraftübertragung durch geschlossene Wandungen hindurch.

Weiterhin ist bei der neuen Anordnung die vorteilhafte Möglichkeit gegeben, den Stator für eine zusätzliche Messung von rotatorischen Größen, in diesem Fall absoluter Größen, mitzubenutzen. Dabei werden rotatorische Größen auf die übliche Weise direkt ermittelt, d. h. relativ zum stationären Meßaufnehmer. Liefert der Meßaufnehmer z.B. ein zwei- oder mehrkanaliges Signal (Quadratursignale, Kommutierungssignale o.ä.) auf der Basis der auf dem Stator befindlichen Magnetpole, die zu diesem Zweck auch an anderer Stelle zugänglich sind, ist eine gleichzeitige, präzise Erfassung des absoluten Drehwinkels und des Abtriebsdrehmoments auf einfachste Weise möglich, darüberhinaus natürlich sämtliche ableitbaren Größen. So kann z.B. der Geber eines elektronisch kommutierten Direktantriebs sehr einfach in dessen Drehmomenterfassung integriert bzw. damit kombiniert werden.

Die Erfindung wird im folgenden anhand von Ausführungsbeispielen näher erläutert und beschrieben. Dabei zeigt
Fig. 1: einen Rotor einer ersten Ausführungsform der erfindungsgemäßen Anordnung in einer axialen Draufsicht,
Fig. 2: den Rotor gemäß Fig. 1 in einer radial geschnittenen Ansicht,
Fig. 3: den Rotor gemäß Fig. 1 und zwei in einer radialen Draufsicht,
Fig. 4: einen Stator der ersten Ausführungsform der erfindungsgemäßen Anordnung in einer axialen Draufsicht,
Fig. 5: den Stator gemäß Fig. 4 in einer radial geschnittenen Ansicht,
Fig. 6: die erfindungsgemäße Anordnung mit dem Rotor gemäß den Fig. 1 bis 3, mit dem Stator gemäß den Fig. 4 und 5 und mit Hallsensoren, im neutralen Zustand in einer axialen Draufsicht,
Fig. 7: die Anordnung gemäß Fig. 6 in einer radial geschnittenen Ansicht,
Fig. 8: die Anordnung gemäß Fig. 6, im ausgelenkten Zustand in einer axialen Draufsicht,
Fig. 9: ein konkretes Anwendungsbeispiel der erfindungsgemäßen Anordnung in Gestalt einer Drehmomenterfassung für eine elektrische Servolenkung.,
Fig. 10: ein weiteres konkretes Anwendungsbeispiel der erfindungsgemäßen Anordnung bei einem Rollstuhl mit Elektro-Direktantrieb und Greifringbetätigung.
Fig. 11: ein Detail der Anordnung gemäß Fig. 10 in einer vergrößerten geschnittenen Ansicht.

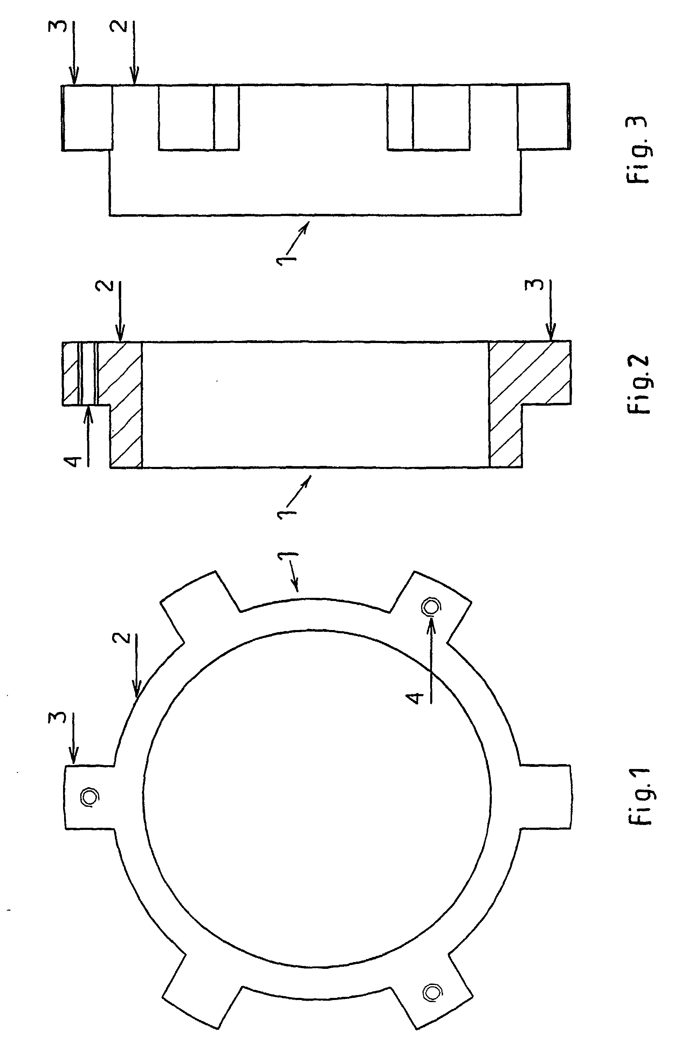

In den Fig. 1 bis 3 ist ein Rotor 1 einer typischen erfindungsgemäßen Anordnung dargestellt. In der vorliegenden , bevorzugten Ausführungsform ist der Rotor 1 einteilig. Er besteht aus einem geeignet geformten Joch 2 und weist hier sechs Polköpfe 3 auf. Die Bohrungen 4 sind nur ein Beispiel für eine mögliche Befestigung/Lagerung des Rotors 1. Die hohle Ausführung des Rotors 1 ist in vielen Fällen von Vorteil, die Anordnung kann jedoch ebensogut mit kleinem Durchmesser und geschlossener Welle konstruiert sein.

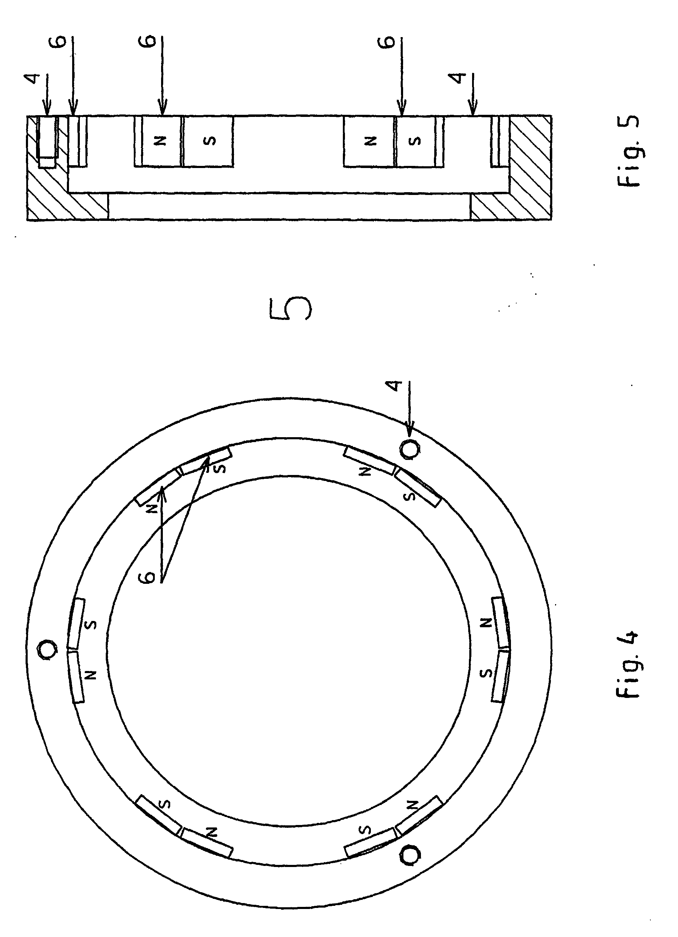

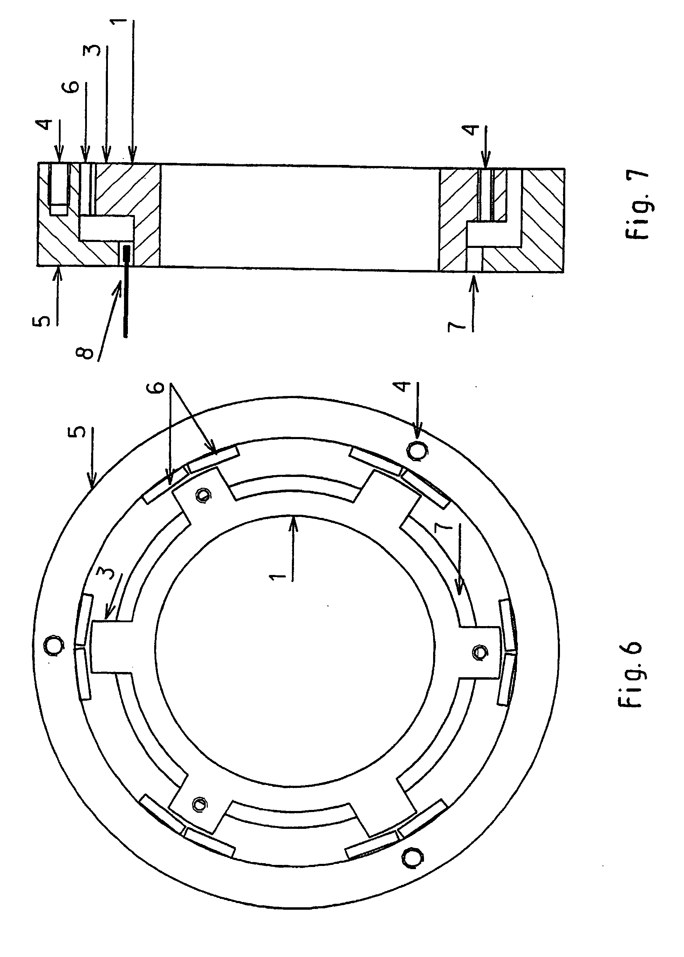

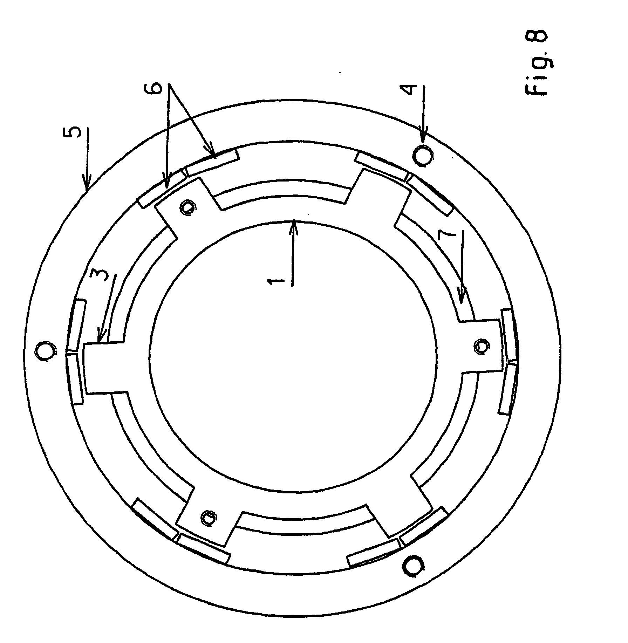

In den Fig. 4 und 5 ist ein Stator 5 einer typischen erfindungsgemäßen Anordnung wiedergegeben. Der Stator 5 ist entweder wie hier ein mit Permanentmagneten versehener Rückschlußring, oder er besteht vollständig aus einem Material mit hoher magnetischer Remanenz, wie z.B. einem Ferritring, der in der gewünschten Weise magnetisiert ist. In jedem Fall sind an dem Stator Pole 6 ausgebildet, die in tangentialer Richtung ungleichnamig aufeinanderfolgen und ungleichnamig zu Polpaaren zusammengefasst sind. Die Anzahl der Polpaare entspricht der Anzahl der Polköpfe 3 des Rotors 1.
In der zusammengebauten Anordnung gemäß den Fig. 6 und 7 befinden sich die Polköpfe 3 des Rotors 1 mittig unterhalb der Stoßkanten der Pole 6 des Stators 5, so daß der resultierende Fluß in dem Joch 2 und somit auch in einem Luftspalt 7 null ist. Die Wirkung der Nord- und Südpole 6 des Stators beschränkt sich auf ein Neutralisieren an der Oberfläche der Polköpfe 3.

In Fig. 8, die den ausgelenkten Zustand der Anordnung gemäß den Figuren 6 und 7 zeigt, ist erkennbar, daß die verschobenen Polköpfe 3 unsymmetrisch von den Polen 6 abgedeckt werden, in der Darstellung stärker von den Nordpolen. Es entsteht ein Gesamtfluß über die Pole 3, das Joch 2, und den Luftspalt 7 zurück zu dem Stator 5 bzw. dem Rückschlußring. Ein in dem Luftspalt 7 angeordneter Hallsensor 8 wandelt diesen Fluß in ein elektrisches Signal um. Statt des hier axial zugänglichen Luftspalts 7 sind bei entsprechender Konstruktion auch radial von außen oder innen zugängliche Luftspalte möglich.

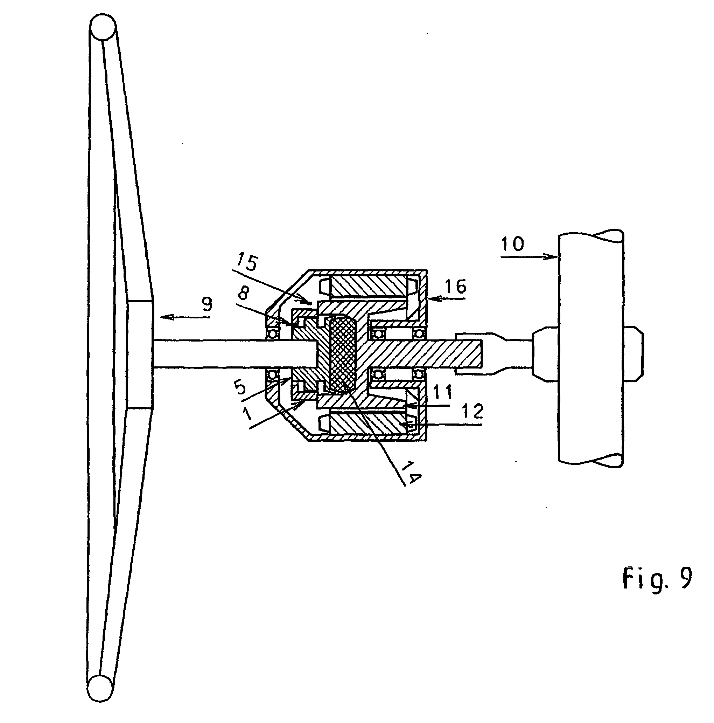

Fig. 9 zeigt als Anwendungsbeispiel der erfindungsgemäßen Anordnung eine elektrische Servolenkung (Lenkunterstützung) eines Kraftfahrzeugs. Zwischen einem Lenkrad 9 und einem Lenkgetriebe 10 befindet sich eine kompakte Einheit, die einen elektronisch kommutierten Direktantriebsmotor 11/12 und die erfindungsgemäße Anordnung mit dem Rotor 1 und dem Stator 5 umfaßt. Diese Baugruppen sind in einem gemeinsamen Gehäuse 16 untergebracht sein, wobei der mit einer Servoelektronik verbundene Hallsensor 8 in einer geeigneten Halterung im Luftspalt der Anordnung 1/5, aber außerhalb von evtl. im Gehäuse 16 befindlichen Ölen angeordnet ist. Zwischen An- und Abtrieb der Anordnung befindet sich ein Federelement 14, welches bei Beaufschlagen mit einem Drehmoment tordiert und somit einen Drehwinkel zwischen Rotor dem 1 und dem Stator 5 liefert. Ein durch den Fahrer am Lenkrad aufgebrachtes Drehmoment wird daher durch die Anordnung gemessen und über den Hallsensor 8 in ein elektrisches Signal umgesetzt. Ein zweiter Hallsensor 15, welcher die permanente Magnetisierung des Stators 5 an anderer Stelle abtastet, liefert der Servoelektronik alle notwendigen Signale für den Betrieb des Motors und das Schließen des Regelkreises, da der Stator 5 starr mit dem Abtrieb und dem Rotor 1 des Direktantriebsmotors verbunden ist. Der bewickelte Stator 5 des Direktantriebsmotors ist fest in dem Gehäuse 16 montiert. Die Servoelektronik wertet eine Kraftanforderung am Lenkrad in Gestalt eines Signals des Hallgenerators 8 aus und steuert den Direktantriebsmotor 11/12 in geeigneter Weise, sodaß die am Lenkrad 9 aufzubringenden Kräfte in gewünschter Weise verringert werden.

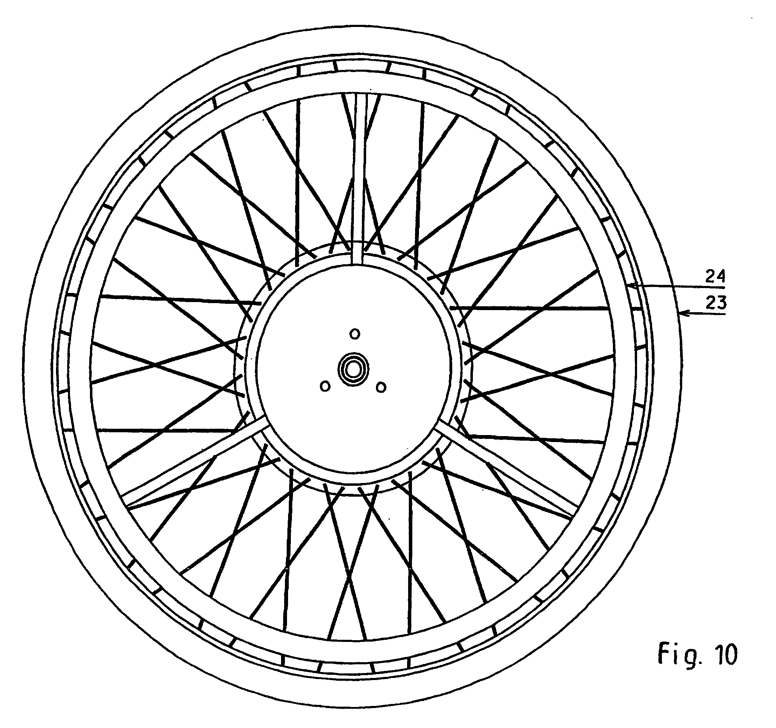

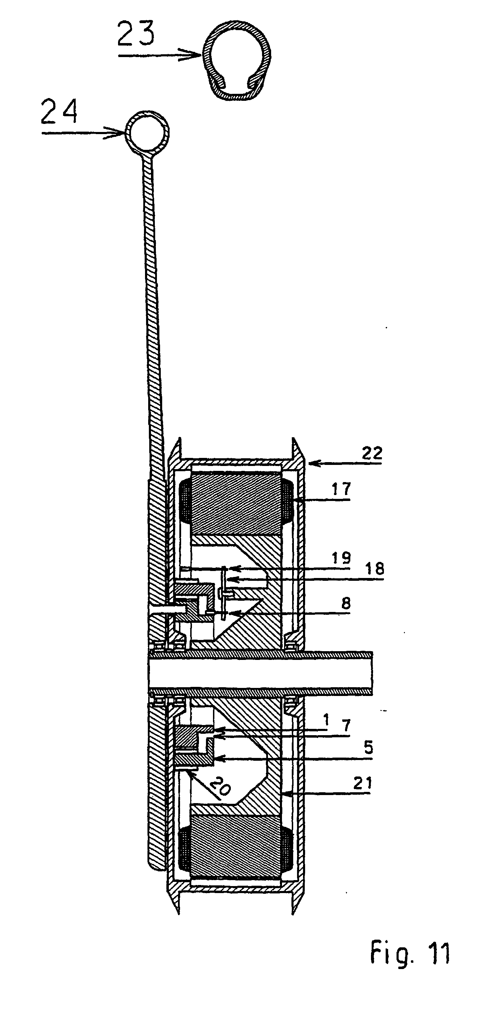

In den Fig. 10 und Fig. 11 ist als weitere beispielhafte Anwendung der erfindungsgemäßen Anordnung eine absolute Drehwinkelmessung zum Betrieb eines Antriebsrades 23 an einem elektrischen Rollstuhl mit einer unabhängigen Erfassung der Betätigungskräfte eines am Rad montierten Greifrings 24 skizziert. Das Antriebsrad 23 ist über Speichen mit einem Motoraußengehäuse 22 verbunden. Der Greifring 24 kann gegen die Kraft einer hier nicht dargestellten Feder geringfügig gegenüber dem Rad aus einer Neutralstellung heraus verdreht werden, diese Drehung wird direkt auf den mit dem Greifring 24 verbundenen Rotor 1 übertragen, während der Stator 5 direkt an dem Motoraußengehäuse 22 befestigt ist. Zur Steuerung eines im Rad enthaltenen, elektronisch kommutierten Motors 17 werden Kommutierungssignale benötigt, die von Hallsensoren 19 geliefert werden und die im weiteren auch dazu verwendet werden können, die Fahrbewegungen des Rollstuhls präzise zu regeln. Die Hallsensoren 19 messen zu diesem Zweck die Rad- bzw. Rotorposition des Motors direkt am Stator 5, der deshalb auch auf der Außenseite Permanentmagnete 20 aufweist. Im einfachsten Fall kann der Stator aus einem Ferritring bestehen, der radial durchgehend magnetisiert ist (hier nicht dargestellt). Die Abtastung der Innenseite übernehmen in der bereits beschriebenen Weise die Polköpfe 3 des Rotors 1, die Auswertung übernimmt der im Luftspalt 7 befindliche Hallsensor 8. Sämtliche Hallsensoren sind hier der Einfachheit halber auf einer gemeinsamen Leiterplatte 18 untergebracht, die in einer Haltevorrichtung an einem Motorträger 21 befestigt ist.

Wirkt nun eine Betätigungskraft auf den Greifring 24, erkennt dies die Elektronik anhand der von dem Hallgeber 8 gelieferten Signale und setzt zusätzliche Antriebsenergie mittels des Motors 17 frei, um die zur Bewegung des Rollstuhls notwendigen Kräfte für den Insassen zu verringern.

## Patentansprüche

1. Anordnung zur kontaktlosen Erfassung von rotatorischen Größen zwischen rotierenden Teilen, insbesondere von Drehwinkeln und Drehmomenten, mit einem Stator, der eine permanente radiale oder axiale Magnetisierung aufweist, die Polpaare mit in Richtung des Differenzwinkels zwischen dem Rotor und dem Stator aufeinanderfolgenden ungleichnamigen Polen ausbildet, und mit einem ferromagnetischen Rotor, der Polköpfe in radialer bzw. axialer Orientierung zur magnetischen Abtastung des Stators aufweist, wobei ein erster Luftspalt zwischen dem Rotor und dem Stator ausgebildet ist, über den hinweg jeder Polkopf des Rotors in gleichen Verhältnissen unterhalb einem der magnetischen Polpaare des Stators angeordnet ist, wobei ein axial oder radial zugänglicher, rotationssymmetrischer zweiter Luftspalt vorgesehen ist, in dem sich der magnetische Fluss abhängig vom Differenzwinkel zwischen dem Rotor und dem Stator ändert und in dem diese Änderung erfasst wird, **dadurch gekennzeichnet, dass** der zweite Luftspalt (7) ebenfalls zwischen dem Stator (5) und dem Rotor (1) ausgebildet ist.

2. Anordnung nach Anspruch 1, **dadurch gekennzeichnet, dass** der Stator (5) eine permanente radiale Magnetisierung aufweist, dass die Polköpfe (3) des Rotors (1) in radialer Orientierung vorgesehen sind und dass der erste Luftspalt und der zweite Luftspalt (7) radiale Luftspalte sind.

3. Anordnung nach Anspruch 1, **dadurch gekennzeichnet, dass** ein in dem zweiten Luftspalt (7) stationär angebrachtes, magnetisch empfindliches Bauteil (8) die magnetische Flußänderung in ein elektrisches Meßsignal umsetzt.

4. Anordnung nach Anspruch 1, **dadurch gekennzeichnet, dass** die magnetischen Haltekräfte oder eine mechanische Feder zwischen dem Stator (5) und dem Rotor (1) ein Drehmoment in einen Drehwinkel umsetzen.

5. Anordnung nach Anspruch 1, **dadurch gekennzeichnet, dass** der Stator (5) und / oder der Rotor (1) eine paramagnetische oder diamagnetische Kapselung zur Abdichtung aufweisen.

6. Anordnung nach Anspruch 1, **dadurch gekennzeichnet, dass** der Stator (5) durch separate stationäre Abtastung seiner permanenten Magnetisierung gleichzeitig zur Erfassung absoluter rotatorischer Größen zwischen dem rotierenden und dem stationären Teil vorgesehen ist.

## Claims

1. Arrangement for detecting rotational variables, particularly angles of rotation and torques, between rotating components in a contactless manner, the arrangement comprising a stator having a permanent radial or axial magnetization forming pole pairs of magnetic poles of opposite signs following each other in the direction of the difference angle between the rotor and the stator, and a ferromagnetic rotor having pole ends in a radial or axial orientation for magnetically scanning the stator, a first air gap being formed between the rotor and the stator over which each of the pole ends of the rotor faces one of the magnetic pole pairs of the stator under the same conditions, an axially or radial accessible rotationally symmetric second air gap being provided in which the magnetic flux changes according to the difference angle between the rotor and the stator and in which this change is determined, **characterized in that** the second air gap (7) is also formed between the stator (5) and the rotor (1).

2. Arrangement according to claim 1, **characterized in that** the stator (5) has a permanent radial magnetization, that the pole ends (3) of the rotor (1) have a radial orientation, and that the first air gap and the second air gap (7) are radial air gaps.

3. Arrangement according to claim 1, **characterized in that** a magnetically sensitive element (8) stationary arranged in the second air gap (7) transforms the changing magnetic flux into an electrical measurement signal.

4. Arrangement according to claim 1, **characterized in that** the magnetic holding force or a mechanical spring between the stator (5) and the rotor (1) transforms a torque into an angle of rotation.

5. Arrangement according to claim 1, **characterized in that** the stator (5) and/or the rotor (1) have a paramagnetic or diamagnetic encapsulation for sealing.

6. Arrangement according to claim 1, **characterized in that** the stator (5) is by means of separately stationarily scanning its permanent magnetisation also provided for determining absolute rotational variables between the rotating and the stationary part.

## Revendications

1. Dispositif pour détecter sans contact des grandeurs de rotation entre des pièces rotatives, en particulier d'angles de rotation et de couples de rotation, comportant un stator qui présente une magnétisation radiale ou axiale permanente, laquelle réalise des paires de pôles avec des pôles de polarité inverse se succédant dans la direction de l'angle différentiel entre le rotor et le stator, et comportant un rotor ferromagnétique qui possède des têtes polaires en orientation radiale ou axiale pour le balayage magnétique du stator, un premier entrefer étant réalisé entre le rotor et le stator, par lequel chaque tête polaire du rotor est disposée dans des mêmes conditions au-dessous de l'une des paires de pôles magnétiques du stator, un deuxième entrefer, accessible axialement ou radialement, à symétrie de révolution, étant prévu, dans lequel le flux magnétique varie en fonction de l'angle différentiel entre le rotor et le stator et dans lequel cette variation est détectée, **caractérisé en ce que** le deuxième entrefer (7) est réalisé également entre le stator (5) et le rotor (1).

2. Dispositif selon la revendication 1, **caractérisé en ce que** le stator (5) présente une magnétisation radiale permanente, **en ce que** les têtes polaires (3) du rotor (1) sont prévues dans une orientation radiale, et **en ce que** le premier entrefer et le deuxième entrefer (7) sont des entrefers radiaux.

3. Dispositif selon la revendication 1, **caractérisé en ce qu'**un composant (8) réagissant magnétiquement, placé de manière fixe dans le deuxième entrefer (7), convertit la variation du flux magnétique en un signal de mesure électrique.

4. Dispositif selon la revendication 1, **caractérisé en ce que** les forces de maintien magnétique ou à ressort mécanique entre le stator (5) et le rotor (1) convertissent un couple de rotation en un angle de rotation.

5. Dispositif selon la revendication 1, **caractérisé en ce que** le stator (5) et/ou le rotor (1) comportent un blindage paramagnétique ou diamagnétique pour l'étanchéité.

6. Dispositif selon la revendication 1, **caractérisé en ce que** le stator (5) est prévu en même temps pour détecter des grandeurs de rotation absolues entre la pièce rotative et la pièce fixe, par balayage stationnaire séparé de sa magnétisation permanente.
